# EUROPÄISCHE PATENTSCHRIFT

(11) **EP 3 956 179 B1**
(45) Veröffentlichungstag und Bekanntmachung des Hinweises auf die Patenterteilung: **11.09.2024**
(21) Anmeldenummer: 20719361.6
(22) Anmeldetag: 07.04.2020
(51) Int. Cl.: B60R 13/10

(54) **KENNZEICHEN FÜR EIN FAHRZEUG UND VERFAHREN ZUR HERSTELLUNG EINES KENNZEICHENS FÜR EIN FAHRZEUG**
LICENSE PLATE FOR A VEHICLE, AND METHOD FOR PRODUCING A LICENSE PLATE FOR A VEHICLE
PLAQUE D'IMMATRICULATION POUR UN VÉHICULE ET PROCÉDÉ DE FABRICATION D'UNE PLAQUE D'IMMATRICULATION POUR UN VÉHICULE

(30) Priorität: 15.04.2019 DE 102019002722
(43) Veröffentlichungstag der Anmeldung: 23.02.2022
(73) Patentinhaber: Tönnjes ISI Patent Holding GmbH, 27751 Delmenhorst (DE)
(72) Erfinder: BEENKEN, Björn, 27777 Ganderkesee (DE)
(74) Vertreter: Hoener, Matthias
(86) Internationale Anmeldenummer: PCT/EP2020/059874
(87) Internationale Veröffentlichungsnummer: WO 2020/212200

(56) Entgegenhaltungen:
- EP-A2- 1 466 298
- WO-A1-93/19450
- DE-A1- 102006 044 584
- DE-U1- 202019 001 169

## Beschreibung

Die Erfindung betrifft ein Kennzeichen für ein Fahrzeug gemäß dem Oberbegriff des Anspruchs 1. Des Weiteren betrifft die Erfindung ein Montagesatz zum Zusammensetzen eines Kennzeichens für ein Fahrzeug gemäß dem Anspruch 12.

Darüber hinaus betrifft die Erfindung ein Verfahren zur Herstellung eines Kennzeichens für ein Fahrzeug gemäß dem Oberbegriff des Anspruchs 13.

Bei dem hier beschriebenen Kennzeichen gemäß der Erfindung handelt es sich um ein Nummernschild für ein Kraftfahrzeug, das vorn und/oder hinten an einer Karosserie oder einer Stoßstange des Fahrzeuges befestigt werden kann. Kennzeichen der beschriebenen Art sind häufig Gegenstand von Manipulationen oder Fälschungen. Um das zu vermeiden, sind Kennzeichen bekannt, welche einen berührungslos auslesbaren Datenträger aufweisen. Auf diesem Datenträger sind relevante Daten bezüglich des Fahrzeugs sowie des Fahrzeughalters gespeichert. Das Auslesen dieser Daten erfolgt mittels eines externen Lesegerätes. Der Abgleich der ausgelesenen Daten mit Daten, die beispielsweise in einer offiziellen Datenbank bezüglich des Fahrzeuges hinterlegt sind, lässt Rückschlüsse auf Manipulationen zu, insbesondere wenn das Kennzeichen einem von den gespeicherten Daten abweichenden Fahrzeug zugeordnet ist.

Bei bekannten Kennzeichen sind die Datenträger bzw. Transponder mit einer Schlitzantenne in einem Kennzeichenkörper gekoppelt. Über diese Schlitzantenne lässt sich der Datenträger sodann über größere Entfernungen auslesen. Die Schlitzstruktur der Antenne ist dabei in den metallischen Kennzeichenkörper des Kennzeichens oder in einer metallischen Schicht des Kennzeichens eingearbeitet. Die Schlitzstruktur in dem metallischen Kennzeichenkörper bildet dabei eine inverse Dipolantenne. Es ist somit ganz wesentlich, dass die Schlitzstruktur wenigstens teilweise metallisch ausgebildet ist, um als Antenne wirken zu können.

Ein weiterer wichtiger Punkt bei der Realisierung derartiger Kennzeichen ist, dass der Kennzeichenkörper mit der Schlitzstruktur elektrisch isoliert von der metallischen Karosserie an dem Fahrzeug befestigt wird. Sofern der metallische Kennzeichenkörper mit der Schlitzstruktur direkt an die Karosserie angebracht wird, werden die Sende- bzw. Empfangseigenschaften der Schlitzantenne dermaßen gestört, dass der Datenträger nicht mehr ausgelesen werden kann. Insbesondere in Regionen, in denen es nicht üblich ist, dass zwischen der Karosserie und dem Kennzeichenkörper ein Halterahmen aus Kunststoff angebracht wird, ist es üblich, den Kennzeichenkörper des Kennzeichens direkt an die Karosserie zu schrauben. In diesen Fällen ist die Funktionsfähigkeit des Kennzeichens gestört. WO93/19450A1 offenbart ein gattungsgemäßes Kennzeichen bzw. Verfahren.

Der Erfindung liegt die Aufgabe zugrunde, ein Kennzeichen sowie ein Verfahren zur Herstellung dieses Kennzeichens sowie einen Montagesatz zu schaffen, mit dem die Funktionsfähigkeit des Kennzeichens gewährleistet werden kann.

Ein Kennzeichen zur Lösung dieser Aufgabe weist die Merkmale des Anspruchs 1 auf. Dieses Kennzeichen besteht aus einem Kennzeichenkörper, der mindestens ein Beschriftungsfeld aufweist. Diesem Beschriftungsfeld wiederum ist mindestens eine Beschriftung zugeordnet. Bei der Beschriftung kann es sich um in den Kennzeichenkörper geprägte Ziffern handeln oder um eine aufgeklebte oder in einer sonstigen Art und Weise aufgetragene Numerik. Des Weiteren ist dem Kennzeichenkörper mindestens ein berührungslos auslesbarer Transponder mit einem Datenträger und einer Antenne zur Kommunikation zugeordnet. Zum Schutz gegenüber Umwelteinflüssen und Manipulationen ist dem Kennzeichenkörper außerdem mindestens eine Schutzabdeckung zugeordnet. Erfindungsgemäß ist der Kennzeichenkörper fest mit einem weiteren Körper verbunden. Dieser weitere Körper ist als Distanzelement ausgebildet und zwischen einer Rückseite des Kennzeichenkörpers und dem Fahrzeug angeordnet. Durch diesen Verbund bestehend aus Kennzeichenkörper und dem weiteren Körper wird sichergestellt, dass das Kennzeichen stets als Verbund an dem Fahrzeug befestigt wird. Durch die feste Zuordnung des weiteren Körpers an dem Kennzeichenkörper ist eine feste Beabstandung zwischen der metallischen Karosserie und dem Kennzeichenkörper gegeben. Dadurch kann der Datenträger des Transponders ohne Störung ausgelesen werden. Neben dieser direkten Verbindung des weiteren Körpers an der Karosserie eines Fahrzeugs ist es außerdem denkbar, dass der weitere Körper zusammen mit dem Kennzeichenkörper über einen Kennzeichenhalter an der Karosserie befestigbar ist. Bei diesem Kennzeichenhalter kann es sich um einen bekannten, konventionellen Kennzeichenhalter oder um einen Kennzeichenhalter handeln, der speziell auf die Form des weiteren Körpers abgestimmt ist.

Insbesondere sieht es die vorliegende Erfindung weiter vor, dass der weitere Körper eine Rückseite des Kennzeichenkörpers teilweise abdeckt oder dass der weitere Körper die Rückseite des Kennzeichenkörpers vollständig abdeckt, insbesondere dass der weitere Körper und der Kennzeichenkörper gleich groß sind oder dass der weitere Körper größer als der Kennzeichenkörper ist. So ist es denkbar, dass für eine sichere Befestigung des Kennzeichens an dem Fahrzeug der weitere Körper bzw. das Distanzelement derart ausgebildet ist, dass es gerade der Fläche der Karosserie entspricht, an dem das Kennzeichen an dem Fahrzeug befestigt wird. In diesem Fall kann der weitere Körper kleiner sein als der Kennzeichenkörper. Weiter ist es denkbar, dass der weitere Körper bzw. das Distanzelement die gleiche Größe bzw. die gleiche Grundfläche aufweisen, wie der Kennzeichenkörper. Durch diese Dimensionierung des weiteren Körpers kann eine besonders hohe Sicherheit gegen Manipulationen erzielt werden, da ein Entfernen des Kennzeichenkörpers von dem weiteren Körper schwer ist bzw. weil eine größtmögliche Kontakt- bzw. Verbindungsfläche zwischen den Körpern besteht. Die weitere Alternative, wonach der Körper größer ist als der Kennzeichenkörper, bietet die Möglichkeit, weitere Beschriftungen, wie beispielsweise Werbung oder den Namen eines Autohändlers, auf die nicht von dem Kennzeichenkörper abgedeckte Fläche des weiteren Körpers anzubringen.

Bevorzugt kann es außerdem vorgesehen sein, dass der Kennzeichenkörper mit dem weiteren Körper stoffschlüssig oder formschlüssig oder kraftschlüssig verbunden ist, insbesondere verklebt, verpresst oder verschraubt oder vernietet ist. Bei einer stoffschlüssigen Verbindung ist es vorgesehen, dass auf dem weiteren Körper eine vorzugsweise beidseitige, selbstklebende Schicht aufgebracht wird. Diese Schicht weist an einer Unterseite und einer Oberseite jeweils ein Klebesubstrat auf. Zwischen diesen beiden Klebesubstraten ist eine Trägerfolie angeordnet. Vor dem Anbringen der Folie auf dem weiteren Körper bzw. vor dem Inverbindungbringen des Kennzeichenkörpers mit dem Klebesubstrat wird zunächst eine Schutzfolie von dem Klebesubstrat abgezogen. Es ist denkbar, dass die Schicht nur partiell verklebt wird. Darüber hinaus kann es vorgesehen sein, dass als Klebematerial sowohl ein 1K- als auch ein 2K-Komponenten-Kleber verwendet wird. Außerdem ist es denkbar, dass der weitere Körper mit dem Kennzeichenkörper verpresst wird bzw. dass beiden Körpern eine Umrandung und/oder eine Beschriftung aufgeprägt wird. Durch dieses gemeinsame Prägen wird eine besonders feste und somit manipulationssichere Verbindung zwischen den Körpern geschaffen.

Ein weiteres vorteilhaftes Ausführungsbeispiel der vorliegenden Erfindung kann es vorsehen, dass der weitere Körper aus Kunststoff oder Metall oder teilweise aus Kunststoff und teilweise aus Metall aufgebaut ist, wobei der weitere Körper massiv, hohl bzw. teilweise hohl oder als Schaum ausgebildet ist. Der Kennzeichenkörper besteht aus einem Metall oder einem Kunststoff. Als bevorzugtes Material für den weiteren Körper bietet sich ein Schaum bzw. Hartschaum, insbesondere ein Hartschaum aus PVC, PMMA oder PC an. Der weitere Körper ist vorzugsweise als Platte ausgebildet mit einer Stärke von 1 mm bis 10 mm bzw. von 2 mm bis 8 mm, vorzugsweise 5 mm. Dabei ist es wesentlich, dass die Platte bzw. diese Abstandshalter oder Distanzkörper bzw. Distanzelemente resistent sind gegen mechanische sowie chemische Umwelteinflüsse und UV-Strahlung. Neben einer massiven bzw. schaumartigen Platte ist es auch denkbar, dass der weitere Körper als Hohlkörper ausgebildet ist mit vorzugsweise stegartigen Verstärkungen.

Gemäß der Erfindung wird vorgesehen, dass der Transponder in einem Etikett, insbesondere einem Label, integriert ist und das Etikett auf dem Kennzeichenkörper fixierbar oder in den Kennzeichenkörper integrierbar ist. Bei dem Etikett handelt es sich vorzugsweise um eine plättchenartige, wetterfeste Ummantelung bzw. Umhüllung des Transponders. Dadurch, dass das Etikett fest auf dem Kennzeichenkörper fixiert wird, gestaltet sich eine Manipulation bzw. Beschädigung als schwierig bzw. wird bei einem Manipulationsversuch das Etikett derartig zerstört, dass eine weitere Verwendung des Transponders nicht möglich ist.

Bevorzugt kann es vorgesehen sein, dass das Etikett selbstklebend ausgebildet ist und auf den Kennzeichenkörper oder die Schutzabdeckung, insbesondere auf eine Folie oder Reflexfolie, klebbar ist. Dabei kann das plättchenförmige Etikett nur einseitig oder beidseitig selbstklebend ausgebildet sein. Die Klebeverbindung zwischen dem Etikett und dem Kennzeichenkörper bzw. der Schutzabdeckung ist derart ausgebildet, dass bei einem Versuch des Entfernens des Etiketts von dem Kennzeichenkörper das Etikett und somit der Datenträger bzw. der Transponder zerstört werden. Dazu kann es außerdem vorgesehen sein, dass das Etikett Sollbruch- bzw. Sollreißstellen aufweist. Durch diese Klebeverbindung kann somit die Manipulationssicherheit des Kennzeichens weiter erhöht werden.

Ein weiteres Ausführungsbeispiel kann es vorsehen, dass der in das Etikett integrierte Transponder als NFC-Transponder ausgebildet ist. NFC-Transponder eignen sich insbesondere für die Nahfeldkommunikation. So könnte das hier beanspruchte Kennzeichen mitsamt des Etiketts auf eine einfache Art und Weise durch ein Handlesegerät oder ein Mobiltelefon ausgelesen werden. Dies bietet insbesondere für die Überprüfung von Kennzeichen durch beispielsweise Ordnungsdienste einen Vorteil.

Darüber hinaus kann es erfindungsgemäß vorgesehen sein, dass der Kennzeichenkörper eine durch einen Schlitz gebildete UHF-Antenne aufweist und diese UHF-Antenne dem Etikett zuordbar ist, wobei der Transponder als RFID-Chip ausgebildet ist, der an die UHF-Antenne elektrisch koppelt. Die Dimensionierung des Schlitzes sowie die Positionierung des Etiketts in Relation zu dem Schlitz hängen ab von der Dimensionierung des Kennzeichens sowie von der notwendigen elektromagnetischen Verstärkung. Vorzugsweise ist der Schlitz in einem oberen Bereich des Kennzeichenkörpers angeordnet, wo keine geprägten Ziffern angeordnet sind. Gleichermaßen ist aber auch denkbar, dass der Schlitz in einem unteren Bereich oder den seitlichen Bereichen, insbesondere Randbereichen, des Kennzeichenkörpers angeordnet ist. Vorzugsweise ist das Etikett mit dem RFID-Chip nur bereichsweise mit dem Schlitz zusammenzubringen. Durch induktive bzw. kapazitive oder galvanische Kopplung des RFID-Chips an die UHF-Antenne bzw. den Schlitz können Informationen auch über größere Distanzen ausgelesen werden. Dadurch, dass der RFID-Chip mitsamt des Etiketts mit einer gewissen Toleranz über dem Schlitz anzubringen sind, kann der verfahrenstechnische Aufwand bezüglich einer genauen Positionierung eines RFID-Chips in eine Aufnahme stark reduziert und so Kosten gespart werden.

Bevorzugt ist es außerdem vorgesehen, dass die durch einen Schlitz in dem Kennzeichenkörper geformte UHF-Antenne über einem Hohlraum in dem Körper angeordnet ist und der Transponder, insbesondere der RFID-Chip, in dem Hohlraum positioniert ist, vorzugsweise an einer Innenwandung des Hohlraum befestigt ist. Durch die Anordnung des Transponders und somit gegebenenfalls auch des Datenträgers ist dieser vor mechanischen Schäden, Umwelteinflüssen sowie Manipulationen geschützt. Für einen Betrachter ist nur schwer erkennbar, dass das Kennzeichen einen Transponder aufweist. Somit wird insgesamt die Manipulationssicherheit des Kennzeichens verbessert. Außerdem kann durch die Positionierung des Transponders in dem Hohlkörper eine besonders gute elektrische Ankopplung an den Kennzeichenkörper und somit an die Antennenstruktur erreicht werden.

Ein weiteres Ausführungsbeispiel der Erfindung kann es vorsehen, dass der Kennzeichenkörper sowohl einen UHF- als auch einen NFC-Transponder aufweist. Beiden Transpondern ist jeweils eine Antenne bzw. eine Antennenstruktur zugeordnet, die ein Auslesen und/oder Senden von Informationen in den entsprechenden Frequenzbereichen ermöglicht. Durch diese Kombination der NFC- und UHF-Technologien können die Datenträger der Transponder besonders flexibel und gegebenenfalls unabhängig voneinander ausgelesen werden. Es ist außerdem denkbar, dass den UHF- und NFC-Transpondern ein gemeinsamer Datenträger zugeordnet ist, der sodann in zwei verschiedenen Frequenzbereichen auslesbar ist.

Weiter kann es erfindungsgemäß vorgesehen sein, dass der RFID-Chip und der NFC-Transponder eine bauliche Einheit mit zwei Antennen für den HF- und UHF-Frequenzbereich bilden, die unabhängig voneinander auslesbar sind. Durch eine gemeinsame Einhausung des RFID-Chips und des NFC-Transponders lässt sich das Kennzeichen auf eine besonders einfache, günstige und platzsparende Art und Weise mit den elektronischen Bauteilen ausstatten. Da sich die Frequenzbereiche des RFID-Chips und des NFC-Transponders nicht überlappen, kommt es auch zu keiner gegenseitigen Störung beim Senden oder Empfangen von Daten. Vielmehr ist es denkbar, dass der RFID-Chip und der NFC-Transponder sich Bauteile, wie beispielsweise einen Speicher oder sonstige Leitungen, teilen.

Neben den zuvor beschriebenen NFC-Transpondern und/oder den RFID-Chips kann es sich bei dem Transponder auch um aktive elektronische Bauteile handeln. Dazu kann es vorgesehen sein, dass in dem Etikett zusätzlich eine Batterie, insbesondere eine Knopfzelle, als Energieversorgung angeordnet ist. Gleichermaßen kann es vorgesehen sein, dass die Energie für den Betrieb des aktiven Bauteils von einer anderen Quelle bezogen wird, wie beispielsweise einer Fotozelle oder einer Art Dynamo, durch den Bewegungsenergie in elektrische Energie umgewandelt wird.

Darüber hinaus kann es vorgesehen sein, dass die Schutzabdeckung auf dem Kennzeichenkörper wenigstens bereichsweise demetallisiert ist. Dabei ist insbesondere der Bereich, in dem sich das Etikett und/oder der Schlitz befindet, zu demetallisieren. Ohne die Demetallisierung könnten die Metallpartikel in der Schutzabdeckung die Sende- bzw. Empfangsleistung des Transponders bzw. des RFID-Chips reduzieren. Durch die Demetallisierung wird die Leistung des Transponders bzw. des Chips nicht beeinträchtigt.

Es ist außerdem denkbar, dass die Schutzabdeckung prismatisch bzw. als prismatische Folie oder als PVC-Folie oder als transparente Platte, insbesondere aus PMMA oder PC, oder als sonstige Folie ausgebildet ist.

Weiter kann es vorgesehen sein, dass der Kennzeichenkörper einen Durchbruch aufweist. Dieser Durchbruch ist erfindungsgemäß von einem flächigen, wenigstens teilweise elektrisch leitfähigen Träger zumindest weitestgehend abdeckbar. Dieser Träger weist mindestens einen Schlitz auf, der eine Antenne bzw. eine Schlitzantenne bildet und mindestens einen an diese Antenne elektrisch koppelnden, berührungslos auslesbaren Datenträger. Darüber hinaus kann es bei diesem Ausführungsbeispiel vorgesehen sein, dass der weitere Körper vorzugsweise als Hohlkörper ausgebildet ist und eine Öffnung aufweist, die mit dem Durchbruch des Kennzeichenkörpers in Form und Position korrespondiert.

Weiter ist es denkbar, dass der Datenträger einen RFID-Chip und mindestens eine damit elektrisch leitende Spule aufweist, über die der Datenträger und/oder der RFID-Chip induktiv, kapazitiv oder galvanisch mit der Antenne des Trägers koppelbar ist. Durch diese Kopplung können die Daten, die auf dem Datenträger gespeichert sind, auf eine einfache und zuverlässige Art und Weise ausgelesen werden. Gleichermaßen lassen sich auf die gleiche zuverlässige Art und Weise Daten auf dem Datenträger speichern. Durch die Verwendung des RFID-Chips kann der Datenträger mittels bekannter Auslesegeräte ausgelesen bzw. beschrieben werden.

Weiter ist es denkbar, dass der Träger als, vorzugsweise selbstklebende, Folie ausgebildet ist, die derart dimensioniert ist, dass sie wenigstens bereichsweise mit einem Randbereich des Durchbruchs in dem Kennzeichenkörper überlappt. Dabei ist es vorzugsweise vorgesehen, dass der Träger die gleiche Form aufweist, wie der Durchbruch, nur eben etwas größer ist, sodass die Randbereiche des Trägers mit denen des Durchbruchs überlappen. Bevorzugterweise ist der Durchbruch rechteckig, insbesondere schlitzartig, ausgebildet. Über diesen rechteckigen Durchbruch ist sodann der ebenfalls rechteckige Träger ablegbar. Durch die selbstklebende Ausgestaltung der Folie kommt es zu einer einfachen und zuverlässigen Fixierung der Folie auf der Oberfläche des Kennzeichenkörpers bzw. über dem Durchbruch.

Weiter ist es denkbar, dass der Träger mit der Antenne und dem Datenträger durch eine elektrisch leitende, selbstklebende, vorzugsweise beidseitig selbstklebende, Folie über dem Durchbruch auf dem Kennzeichenkörper applizierbar ist, sodass der Träger mechanisch und elektrisch mit dem Kennzeichenkörper gekoppelt ist.

Gemäß der Erfindung ist der Datenträger ein magnetisches Feld erzeugender Datenträger und die Antenne ist durch den mit zumindest einem Schlitz versehenen Kennzeichenkörper gebildet, wobei der Datenträger elektrisch isoliert dem Schlitz zugeordnet ist, insbesondere im Bereich eines Endes des Schlitzes. Der Kennzeichenkörper ist mindestens teilweise aus einem elektrisch leitfähigen Material gebildet, beispielweise aus Aluminiumblech. Der Schlitz im mindestens teilweise leitenden Kennzeichenkörper führt zu einer induktiven Einkopplung der Daten des Datenträgers in den als Antenne dienenden Kennzeichenkörper. Die Antenne, insbesondere der Schlitz bzw. der Datenträger, dienen dabei gleichzeitig als Verstärker. Die Daten des Datenträgers sind so ohne zusätzliche Bauteile und auch ohne Anschlüsse des Datenträgers auch aus relativ großer Entfernung aus dem Kennzeichen auslesbar.

Der Datenträger kann dabei isoliert innerhalb des Schlitzes oder über dem Schlitz angeordnet sein. Bevorzugt ist es denkbar, dass elektrisch leitende Bestandteile des Datenträgers von den Begrenzungsflächen des Schlitzes beabstandet sind. Damit ist der Datenträger im Kennzeichenkörper unterbringbar bzw. integrierbar, ohne dass er zusätzlichen Bauraum erfordert und ohne dass er von der Außenseite bzw. Oberseite des Kennzeichens wahrnehmbar ist.

Eine weitere bevorzugte Ausgestaltung des Kennzeichens sieht es vor, den Schlitz mit mindestens einem Durchbruch zu versehen, wodurch eine bereichsweise Aufweitung des Schlitzes erfolgt. Bevorzugt ist der Durchbruch einem Ende des Schlitzes zugeordnet, sodass das Schlitzende vom Durchbruch vergrößert wird. Durch die Anordnung des Datenträgers im Bereich der vom Durchbruch geschaffenen Aufweitung eines Endes des Schlitzes wird ausreichender Raum für auch größere Datenträger im Kennzeichenkörper geschaffen. Der Datenträger befindet sich dabei innerhalb der Umrisse des Kennzeichenträgers, und zwar ohne hiermit in einen körperlichen bzw. elektrischen Kontakt zu gelangen. Der Datenträger ist im Inneren des Kennzeichens nicht wahrnehmbar, wodurch eine unsichtbare elektrische bzw. elektronische Sicherung des Kennzeichens geschaffen wird. Weiter ist es denkbar, dass der Datenträger im Kennzeichenkörper eingebettet ist. Dabei kann die Einbettung innerhalb des Schlitzes bzw. im Durchbruch erfolgen. Eine Fixierung des Datenträgers kann durch eine Beschichtung des Kennzeichenkörpers erfolgen. Zur anderen Seite hin wird der Datenträger durch die Oberseite des weiteren Körpers geschützt.

Eine weitere Lösung der eingangs genannten Aufgabe wird durch den Anspruch 13 beschrieben. Demnach ist ein Montagesatz vorgesehen, bestehend aus einem Kennzeichenkörper und einem weiteren Körper zum Zusammensetzen eines Kennzeichens für ein Fahrzeug nach mindestens einem der vorherigen Ansprüche 1 bis 12. Dabei kann beispielsweise ein fertig konfektionierter Kennzeichenkörper mit oder ohne Antenne bzw. Transponder sowie losgelöst davon ein weiterer Körper bzw. eine Kunststoffplatte mit einer Klebeschicht als Set angeboten werden. Die Klebeschicht auf dem weiteren Körper wird dabei zunächst von einer Schutzschicht abgedeckt. Der Kunde bzw. der Fahrzeughalter muss sodann nur noch die Schutzfolie von der Klebeschicht auf dem weiteren Körper abziehen und den Kennzeichenkörper auf diese Klebefläche drücken, um eine feste Verbindung zwischen dem Kennzeichenkörper und dem weiteren Körper herzustellen. Für das Anbringen des Verbundkennzeichens ist dieses sodann an die Karosserie zu schrauben. Sofern erforderlich, sind in dem Kennzeichenkörper und/oder dem weiteren Körper noch entsprechende Bohrungen für Verbindungsmittel vorzunehmen. Durch das Anbieten eines derartigen Montagesets kann eine Voraussetzung geschaffen werden, wonach das Kennzeichen mit einem berührungslos auslesbaren Datenträger auf eine Art und Weise an einem Fahrzeug befestigt wird, die die Funktionsfähigkeit des Kennzeichens sicherstellt.

Ein Verfahren zur Lösung der eingangs genannten Aufgabe wird durch die Maßnahmen des Anspruchs 14 beschrieben. Demnach ist es vorgesehen, dass der Kennzeichenkörper mit einem weiteren Körper als Distanzelement fest verbunden wird. Der weitere Körper wird dabei fest an einer Rückseite des Kennzeichenkörpers angeordnet, so dass der weitere Körper ein Abstands- oder Distanzelement zwischen dem Kennzeichenkörper und dem Fahrzeug bildet. Durch diese feste Verbindung kann ein besonders manipulationssicheres Verbundkennzeichen geschaffen werden.

Insbesondere ist es vorgesehen, dass nach einem Prägen des Kennzeichenkörpers und/oder Applizieren einer Folie, insbesondere einer Schutzfolie, einer Reflexfolie, einer Retroreflexfolie, einer Beschriftungsfolie oder dergleichen, und/oder dem Applizieren des Datenträgers und der Antenne, der Kennzeichenkörper mit dem weiteren Körper stoffschlüssig oder formschlüssig oder kraftschlüssig verbunden wird. Dabei ist es denkbar, dass zum festen Verbinden des weiteren Körpers mit dem Kennzeichenkörper auf dem weiteren Körper eine doppelseitige Klebeschicht aufgebracht wird, auf die der Kennzeichenkörper, vorzugsweise manuell oder maschinell, gepresst wird. Alternativ ist es auch denkbar, dass der Kennzeichenkörper mit dem weiteren Körper in einer Prägeeinrichtung bzw. -presse verpresst wird, wobei insbesondere in den Kennzeichenkörper und/oder den weiteren Körper eine gemeinsame Prägung, vorzugsweise Randprägung und/oder Prägung einer Numerik, geprägt wird. Durch dieses gleichzeitige Prägen des Kennzeichenkörpers und des weiteren Körpers sowie des Verklebens der beiden Körper kann ein besonders festes sowie manipulationssicheres Kennzeichen geschaffen werden.

Bevorzugte Ausführungsbeispiele der Erfindung werden nachfolgend anhand der Zeichnung näher erläutert. In dieser zeigen:
- Fig. 1: eine Darstellung eines Kennzeichens,
- Fig. 2: eine Seitenansicht des Kennzeichens bestehend aus einem Kennzeichenkörper und einem weiteren Körper,
- Fig. 3: eine Explosionsdarstellung des Kennzeichens gemäß Fig. 2,
- Fig. 4: eine Darstellung eines weiteren Ausführungsbeispiels eines Kennzeichens,
- Fig. 5: eine Darstellung eines Trägers einer Antennenstruktur,
- Fig. 6: eine Darstellung des weiteren Ausführungsbeispiels des Kennzeichens,
- Fig. 7: eine Darstellung eines weiteren Ausführungsbeispiels eines Kennzeichens,
- Fig. 8: eine Darstellung einer Presse zur Herstellung eines Kennzeichens.

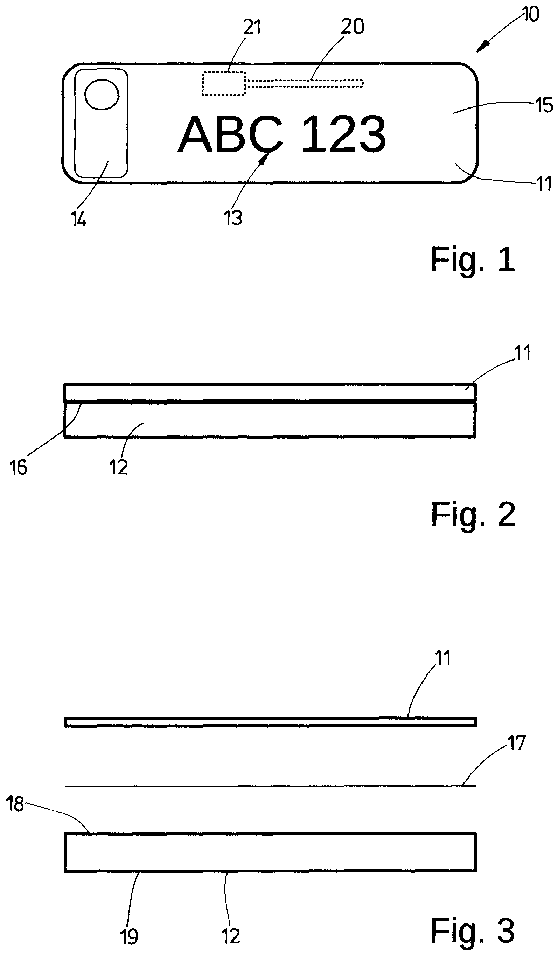

Bei dem hier beschriebenen Kennzeichen 10 handelt es sich um ein Nummernschild für ein Fahrzeug bzw. Kraftfahrzeug. Das in den Figuren dargestellte erfindungsgemäße Kennzeichen 10 besteht im Wesentlichen aus zwei Teilen, nämlich einem Kennzeichenkörper 11 und einem weiteren Körper 12 (Fig. 1 bis Fig. 3). Bei dem Kennzeichenkörper 11 handelt es sich um das eigentliche Nummernschild, auf dem eine Numerik 13 und ggf. ein Feld 14 für eine Länderkennung angeordnet sind. Der Kennzeichenkörper 11 kann aus Kunststoff hergestellt sein oder aus einem Metall, insbesondere einem Alublech. Die Numerik 13 sowie ggf. eine Umrandung des Kennzeichenkörpers 11 können in das Blech eingeprägt sein, sodass die Numerik 13 sowie die Umrandung aus einer Ebene der Oberseite 15 des Kennzeichenkörpers 11 herausragt. Gleichermaßen kann die Numerik 13 als Folie auf die Oberseite 15 des Kennzeichenkörpers 11 appliziert werden.

Des Weiteren kann der Kennzeichenkörper 11 auf seiner Oberseite 15 mehrere Folien aufweisen, wie beispielsweise eine Reflexfolie, eine retroreflektierende Folie, eine prismatische Folie und/oder eine wenigstens teilweise metallisierte Folie. Schließlich kann der Kennzeichenkörper 11 durch eine nicht dargestellte Schutzabdeckung gegen mechanische sowie chemische Einflüsse und UV-Strahlung geschützt werden.

Gemäß der vorliegenden Erfindung ist einer Unterseite 16 des Kennzeichenkörpers 11 der weitere Körper 12 zugeordnet. Bei diesem Körper kann es sich um einen Abstandskörper bzw. ein Abstandselement, einen Isolationskörper sowie ein Distanzelement handeln. Dieser Körper 12 kann, wie in Fig. 2 dargestellt, die gleichen Grundmaße aufweisen, wie der Kennzeichenkörper 11. Die Höhe bzw. Dicke des Körpers 12 ist hier relativ zu dem Kennzeichenkörper 11 nicht maßstabsgetreu dargestellt. Allerdings ist es vorgesehen, dass der Körper 12 eine größere Stärke aufweist als der Kennzeichenkörper 11. Vorzugsweise weist der Körper 12 eine Stärke bzw. Dicke von 2 mm bis 10 mm bzw. 5 mm auf.

Losgelöst von dem in der Fig. 2 dargestellten Ausführungsbeispiel kann es außerdem vorgesehen sein, dass der weitere Körper 12 kleiner ist als der Kennzeichenkörper 11 oder über die Unterseite 16 des Kennzeichenkörpers 11 hinausragt. Der weitere Körper 12 ist aus einem Kunststoff bzw. Hartschaum, vorzugsweise aus PVC, hergestellt. Das Material sollte insbesondere eine geringe bzw. keine elektrische Leitfähigkeit aufweisen. Das bevorzugte Material ist resistent gegen mechanische und chemische Umwelteinflüsse. Darüber hinaus ist es UV-strahlungsresistent. Neben dem in der Fig. 2 dargestellten Ausführungsbeispiel einer massiven Platte, kann der Körper 12 auch hohl sein. Für den Fall, dass der Körper 12 hohl ausgebildet ist, können in dem Körper 12 weitere Elemente, wie beispielsweise Stege, angeordnet sein, die der Stabilisierung des Körpers 12 dienen.

Zur Befestigung des Kennzeichenkörpers 11 auf dem Körper 12 ist zwischen den beiden Körpern 11, 12 eine beidseitig klebende Schicht 17 angeordnet (Fig. 3). Diese Schicht 17 wird auf die Oberseite 18 des Körpers 12 appliziert. Sodann wird ggf. eine nicht dargestellte Schutzschicht von der Klebeschicht 17 entfernt und die Unterseite 16 des Kennzeichenkörpers 11 auf der Schicht 17 abgelegt. Durch Druckbeaufschlagung werden die beiden Körper 11, 12 derart fest miteinander verbunden, dass ein Wiedertrennen nicht möglich ist, ohne dass dabei wenigstens einer der Körper 11, 12 Schaden nimmt.

Der Körper 12 wird mit einer Rückseite 19 an einer Karosserie des Fahrzeuges befestigt. Dies kann beispielsweise durch Schrauben erfolgen. Dafür können der Körper 12 sowie der Kennzeichenkörper 11 entsprechende Öffnungen oder Bohrungen aufweisen.

Das in der Fig. 1 dargestellte Kennzeichen 10 weist eine Schlitzantenne 20 auf. Diese Schlitzantenne 20 wird gebildet durch eine schlitzartige Ausnehmung in dem metallischen Kennzeichenkörper 11. Einem Ende dieser Schlitzantenne 20 ist ein Durchbruch 21 zugeordnet. In diesem Durchbruch 21 kann ein Transponder bzw. ein Datenträger bzw. ein RFID-Chip angeordnet sein. Dieser Transponder ist elektrisch isoliert von dem Kennzeichenkörper 11 fixiert und koppelt elektrisch, vorzugsweise induktiv, kapazitiv oder galvanisch mit der Schlitzantenne 20. Damit der nicht dargestellte, in dem Durchbruch 21 angeordnete, Transponder vor äußeren Einflüssen geschützt ist, wird er durch die oben genannten Schichten bzw. Folien abgedeckt. Dadurch ist weder die Schlitzantenne 20 noch der Transponder von außen sichtbar. Daher sind die Schlitzantenne 20 sowie der Durchbruch 21 in der Fig. 1 gestrichelt dargestellt. Jegliche Folien, die auf dem Kennzeichenkörper 11 angeordnet sind, sind im Bereich der Schlitzantenne 20 und des Durchbruchs 21 demetallisiert, um die Sendeleistung bzw. Empfangsleistung des Transponders nicht zu stören. Der nicht dargestellte, in dem Durchbruch 21 angeordnete, Transponder ist somit zwischen dem elektrisch nicht leitenden Körper 20 und einer Schutzschicht des Kennzeichenkörpers 11 eingeschlossen. Durch den Körper 12 sind sowohl der metallische Kennzeichenkörper 11 bzw. die Schlitzantenne 20 und der Transponder stets elektrisch von der metallischen Karosserie des Fahrzeuges isoliert. Dadurch kann ein störungsfreier Betrieb des Transponders ermöglicht werden. Bei dem in der Fig. 1 dargestellten Ausführungsbeispiel des Kennzeichens 10 ist die Schlitzantenne 20 oberhalb der Numerik 13 angeordnet. Insbesondere bei geprägten Kennzeichenkörpern 11 ist diese Anordnung vorteilhaft. Sofern jedoch die Numerik 13 als Klebeschicht auf den Kennzeichenkörper 11 appliziert wird, kann die Schlitzantennenstruktur auch unterhalb der Numerik 13 angeordnet werden.

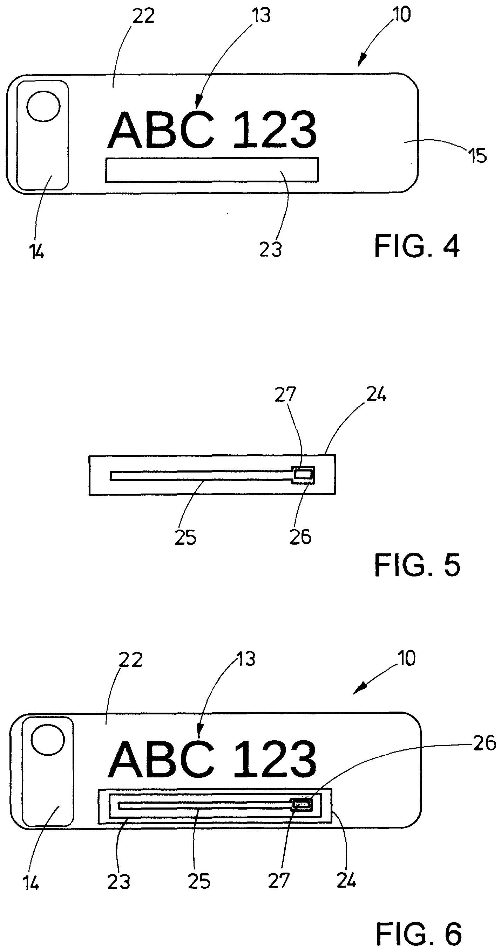

In den Fig. 4 und 6 ist ein weiteres Ausführungsbeispiel des Kennzeichens 10 dargestellt. Hier weist der dem Körper 12 zugeordnete Kennzeichenkörper 22 einen Durchbruch 23 auf. Dieser Durchbruch 23 ist bei dem in der Fig. 4 dargestellten Ausführungsbeispiel ein rechteckiger Ausschnitt in dem metallischen Kennzeichenkörper 22. Die weiteren Elemente des Kennzeichenkörpers 22 sowie der weitere Körper 12 entsprechen dem Ausführungsbeispiel der Fig. 1. Bei dem Ausführungsbeispiel des Kennzeichens 10 gemäß Fig. 4 ist es vorgesehen, dass ein Träger 24 (Fig. 5) mit einer Schlitzantennenstruktur 25 über den Durchbruch 23 appliziert wird. Vorzugsweise wird der Träger 24 über den Durchbruch 23 geklebt. Dadurch, dass der Träger 24 wenigstens teilweise elektrisch leitfähig ist, koppelt die Schlitzantennenstruktur 25 an die Kennzeichenkörper 22. In einer Aufweitung 26 der Schlitzantennenstruktur 25 ist ein RFID-Chip 27 angeordnet. Dieser RFID-Chip 27 ist von der Schlitzantennenstruktur 25 beabstandet, koppelt jedoch induktiv oder kapazitiv an die Schlitzantennenstruktur 25. Die Applikation des eine Schlitzantennenstruktur 25 aufweisenden Trägers 24 auf den Kennzeichenkörper 22 hat den Vorteil, dass der Durchbruch 23 mit einer lediglich geringen Genauigkeit ausgestanzt werden muss. Der Träger 24 kann auf eine einfache und günstige Art und Weise vorbereitet werden und muss nur ungefähr über den Durchbruch 21 angeordnet werden. Durch den dielektrischen Körper 12, der hinter dem Durchbruch 23 angeordnet ist, wird die Schlitzantennenstruktur 25 bzw. der RFID-Chip 27 ausreichend von der metallischen Karosserie des Fahrzeuges beabstandet.

Alternativ oder zusätzlich zu einem in der Fig. 6 dargestellten Träger 24 ist es außerdem denkbar, dass ein nicht dargestelltes Etikett bzw. ein Label mit einem RFID-Chip oder einem sonstigen elektrischen Bauteil zum Senden und Speichern von Daten, wie beispielsweise ein NFC-Transponder, auf der Oberseite 15 des Kennzeichenkörpers 22 appliziert wird.

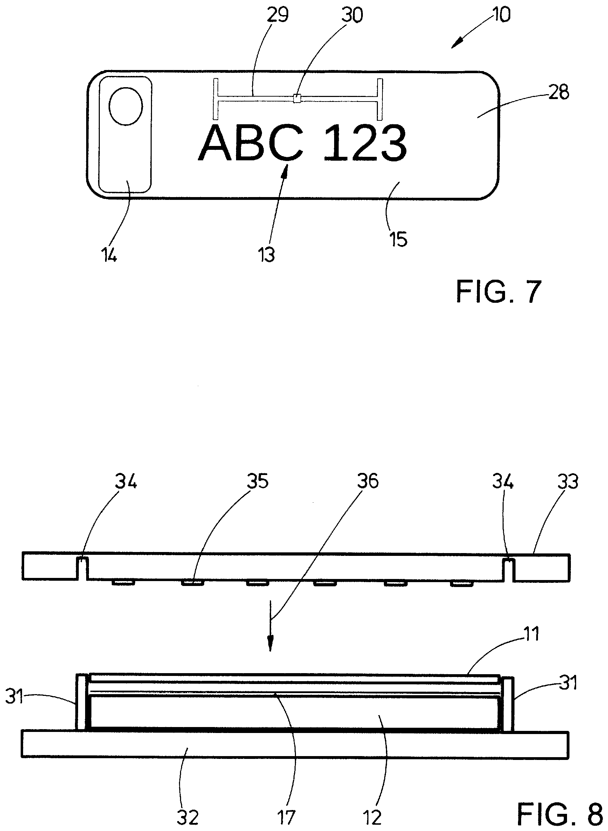

In der Fig. 7 wird ein weiteres Ausführungsbeispiel für einen Kennzeichenkörper 28 dargestellt, der auf einem weiteren Körper 12 aufbringbar ist. Der Kennzeichenkörper 28 weist ebenfalls eine Schlitzantennenstruktur 29 auf. Diese Schlitzantennenstruktur 29 ist in den metallischen Kennzeichenkörper 11 gestanzt. Sie kann durch nicht metallisierte Folien abgedeckt sein. Gleichermaßen ist es denkbar, dass die Schlitzantennenstruktur 29 nicht abgedeckt ist. Der Schlitzantennenstruktur 29 ist ein Transponder 30 zugeordnet, der elektrisch mit der Schlitzantennenstruktur 29 koppelt. Bei diesem Transponder kann es sich beispielsweise um einen UHF-Chip, insbesondere einen RFID-Chip, inklusive Datenträger und ggf. einer weiteren Antenne handeln. Ein besonders bevorzugtes Ausführungsbeispiel sieht es vor, dass der weitere Körper 12, der mit dem Kennzeichenkörper 28 zusammengeführt wird, hohl ist. Bei diesem nicht dargestellten Ausführungsbeispiel ist eine der Schlitzantennenstruktur 29 gegenüberliegende Innenfläche des Körpers 12 mit einer Metallschicht bzw. einer Reflexschicht beaufschlagt. Dadurch werden elektromagnetische Wellen, welche von der Schlitzantennenstruktur 29 ausgesandt werden, reflektiert, wodurch sich die Sendeleistung des Kennzeichens 10 verbessert. Durch die reflektierende Eigenschaft der Innenseite des Hohlkörpers 12 wird Licht, das durch die Schlitzantennenstruktur 29 tritt, zurückreflektiert, sodass die Antennenstruktur 29 von außen nur schwer erkennbar ist. Der Transponder bzw. der Chip ist bei dieser Kennzeichenform entweder auf oder unter dem Kennzeichenkörper angeordnet oder in den Kennzeichenkörper integriert. Außerdem kann der Transponder bzw. der Chip auch im Körper 12 bzw. im Hohlkörper angeordnet sein. Es ist denkbar, dass der Transponder bzw. der Chip an einer Innenseite des Körpers 12 fest angeordnet ist. Bei diesem Ausführungsbeispiel ist es außerdem denkbar, dass der Körper 12 bzw. der Hohlkörper nur in dem Bereich der Schlitzantennenstruktur 29 an der Unterseite 16 des Kennzeichenkörpers 28 angeordnet ist.

Neben dem hier dargestellten Ausführungsbeispiel ist es außerdem denkbar, dass einem konventionellen Kennzeichenkörper ohne Antennenstruktur ein weiterer Körper 12 zugeordnet ist. Dabei kann der Körper 12 sowohl hohl als auch massiv ausgebildet sein. Außerdem ist es denkbar, dass der Körper 12 lediglich eine Rahmenstruktur ist, welche dazu dient, den Kennzeichenkörper von der Karosserie des Fahrzeuges zu beabstanden. Es ist außerdem denkbar, dass der Körper 12 als eine Art offene Schale einer Rückseite des Kennzeichenkörpers zugeordnet ist, sodass der Kennzeichenkörper diese offene Schale vollflächig abdeckt.

Durch die Fig. 8 wird das erfindungsgemäße Verfahren beschrieben. Dabei wird der Körper 12 zwischen Pins 31, die auf einer Platte 32 befestigt sind, positioniert, um ein Verrutschen des Körpers 12 zu vermeiden. Sodann wird auf dem Körper 12 die Schicht 17 appliziert und ggf. eine Schutzschicht entfernt. Auf diese beidseitig klebende Schicht 17 wird sodann der Kennzeichenkörper 11 gelegt. Auf den Kennzeichenkörper 11 wird sodann ein Deckelelement 33 abgelegt und zwar derart, dass die Pins 31 in Öffnungen 34 geführt werden. Das Deckelelement 33 kann plättchenartige Anpresselemente 35 aufweisen, um die Körper materialschonend aber effizient aufeinander zu pressen. Indem das Deckelelement 33 manuell oder durch eine Presse auf den Kennzeichenkörper 11 gepresst wird, wird selbiger mit dem Körper 12 fest verklebt.

Gleichermaßen kann es vorgesehen sein, dass die Sandwichstruktur, bestehend aus den Körpern 11, 12 bzw. 22, 12 oder 28, 12 und der Schicht 17, einer Prägepresse zugeführt wird, in dem sowohl die beiden Körper miteinander verbunden werden als auch die Numerik 13 sowie ein Rand gleichermaßen in die Körper geprägt werden. Durch diese gemeinsame Prägung der Körper erfährt das Kennzeichen 10 eine weitere Stabilisierung.

### Bezugszeichenliste:

- 10: Kennzeichen
- 11: Kennzeichenkörper
- 12: weiterer Körper
- 13: Numerik
- 14: Feld
- 15: Oberseite
- 16: Unterseite
- 17: Schicht
- 18: Oberseite
- 19: Rückseite
- 20: Schlitzantenne
- 21: Durchbruch
- 22: Kennzeichenkörper
- 23: Durchbruch
- 24: Träger
- 25: Schlitzantennenstruktur
- 26: Aufweitung
- 27: RFID-Chip
- 28: Kennzeichenkörper
- 29: Schlitzantennenstruktur
- 30: Transponder
- 31: Pin
- 32: Platte
- 33: Deckelelement
- 34: Öffnung
- 35: Anpresselement
- 36: Pfeilrichtung

## Patentansprüche

1. Kennzeichen (10) für ein Fahrzeug mit einem Kennzeichenkörper (11, 22, 28), der mindestens ein Beschriftungsfeld aufweist und mit mindestens einer Beschriftung, die dem Beschriftungsfeld des Kennzeichenkörpers (11, 22, 28) zugeordnet ist, wobei dem Kennzeichenkörper (11, 22, 28) mindestens ein berührungslos auslesbarer Transponder mit einem Datenträger und einer Antenne zur Kommunikation zugeordnet sind und wobei der Kennzeichenkörper (11, 22, 28) mit einer Schutzabdeckung abgedeckt ist wobei der Kennzeichenkörper (11, 22, 28) mit seiner Unterseite (16) fest mit einem weiteren Körper (12) verbunden ist und wobei der weitere Körper (12) als Distanzelement zwischen dem Kennzeichenkörper (11, 22, 28) und dem Fahrzeug ausgebildet ist, **dadurch gekennzeichnet, dass** der Transponder in einem Etikett integriert ist und das Etikett auf dem Kennzeichenkörper (11, 22, 28) fixiert ist und dass das Etikett selbstklebend ausgebildet ist und auf den Kennzeichenkörper (11, 22, 28) oder die Schutzabdeckung geklebt ist, wobei der Datenträger ein ein magnetisches Feld erzeugender Datenträger ist und die Antenne durch den mit zumindest einen Schlitz versehenen Kennzeichenkörper (11, 22, 28) als Schlitzantenne (20) ausgebildet ist, wobei der Datenträger elektrisch isoliert der Schlitzantenne (20) zugeordnet ist.

2. Kennzeichen (10) für ein Fahrzeug nach Anspruch 1, **dadurch gekennzeichnet, dass** der weitere Körper (12) die Unterseite (16) des Kennzeichenkörpers (11, 22, 28) teilweise abdeckt oder dass der weitere Körper (12) die Unterseite (16) des Kennzeichenkörpers (11, 22, 28) vollständig abdeckt, insbesondere dass der weitere Körper (12) und der Kennzeichenkörper (11, 22, 28) gleich groß sind oder dass der weitere Körper (12) größer als der Kennzeichenkörper (11, 22, 28) ist.

3. Kennzeichen (10) für ein Fahrzeug nach Anspruch 1 oder 2, **dadurch gekennzeichnet, dass** der Kennzeichenkörper (11, 22, 28) mit dem weiteren Körper (12) stoffschlüssig oder formschlüssig oder kraftschlüssig verbunden, insbesondere verklebt, verpresst oder verschraubt, ist und/oder dass der weitere Körper (12) aus Kunststoff oder Metall oder teilweise aus Kunststoff und teilweise aus Metall aufgebaut ist, wobei der weitere Körper (12) massiv, hohl bzw. wenigstens teilweise hohl oder als Schaum ausgebildet ist und wobei der Kennzeichenköper (11, 12, 28) aus Metall oder Kunststoff ausgebildet ist.

4. Kennzeichen (10) für ein Fahrzeug nach einem der vorherigen Ansprüche, **dadurch gekennzeichnet, dass** der Kennzeichenkörper (11, 22, 28) eine durch einen Schlitz (29) gebildete UHF-Antenne aufweist und dieser UHF-Antenne vorzugsweise dem Etikett zuordbar ist, wobei der Transponder in dem Etikett als RFID-Chip ausgebildet ist, der an die UHF-Antenne elektrisch koppelt und/oder dass die durch einen Schlitz (29) in dem Kennzeichenkörper (11, 22, 28) geformte UHF-Antenne über einem Hohlraum in dem Körper (12) angeordnet ist und der Transponder, insbesondere der RFID-Chip, in dem Hohlraum positioniert ist, vorzugsweise an einer Innenwandung des Hohlraum befestigt ist.

5. Kennzeichen (10) für ein Fahrzeug nach einem der vorherigen Ansprüche, **dadurch gekennzeichnet, dass** die Schutzabdeckung wenigstens im Bereich des Etiketts und/oder im Bereich des Schlitzes (29) wenigstens teilweise demetallisiert ist oder die Schutzabdeckung als prismatische Folie oder als PVC-Folie oder als transparente Platte, insbesondere aus PMMA oder PC, oder als sonstige Folie, ausgebildet ist.

6. Kennzeichen (10) für ein Fahrzeug nach einem der vorherigen Ansprüche, **dadurch gekennzeichnet, dass** der Kennzeichenkörper (11, 22, 28) einen Durchbruch (23) aufweist, der von einem flächigen, wenigstens teilweise elektrisch leitenden Träger (24) zumindest teilweise abdeckbar ist, wobei der Träger (24) eine durch zumindest einen Schlitz (25) gebildete Antenne und einen an diese Antenne elektrisch koppelnden, berührungslos auslesbaren Datenträger aufweist und wobei der weitere Körper (12) vorzugsweise als Hohlkörper ausgebildet ist und eine Öffnung aufweist, die mit dem Durchbruch (23) des Kennzeichenköpers (11, 22, 28) in Form und Position korrespondiert.

7. Kennzeichen (10) für ein Fahrzeug nach einem der vorherigen Ansprüche, **dadurch gekennzeichnet, dass** der Datenträger einen RFID-Chip (27) und mindestens eine damit elektrisch leitende Spule aufweist, über die der Datenträger und/oder der RFID-Chip (27) induktiv, kapazitiv oder galvanisch mit der Antenne des Trägers (24) koppelbar ist.

8. Kennzeichen (10) für ein Fahrzeug nach einem der vorherigen Ansprüche, **dadurch gekennzeichnet, dass** der Träger (24) als, vorzugsweise selbstklebende, Folie ausgebildet ist, die derart dimensioniert ist, dass sie wenigstens bereichsweise mit einem Randbereich des Durchbruchs (23) in dem Kennzeichenkörper (11, 22, 28) überlappt, wobei der Träger (24), insbesondere die Folie, wenigstens eine teilweise elektrisch leitende Beschichtung aufweist und durch diese Beschichtung bzw. durch einen Schlitz in der Beschichtung die wenigstens eine Antenne, insbesondere eine Antennenstruktur, gebildet ist.

9. Kennzeichen (10) für ein Fahrzeug nach einem der vorherigen Ansprüche, **dadurch gekennzeichnet, dass** der Träger (24) mit der Antenne (25) und dem Datenträger durch eine elektrisch leitende, selbstklebende, vorzugsweise beidseitig selbstklebende, Folie über dem Durchbruch (23) auf dem Kennzeichenkörper (11, 22, 28) applizierbar ist, so dass der Träger (24) mechanisch und elektrisch mit dem Kennzeichenkörper (11, 22, 28) gekoppelt ist.

10. Kennzeichen (10) für ein Fahrzeug nach einem der vorherigen Ansprüche, **dadurch gekennzeichnet, dass** der Datenträger ein ein magnetisches Feld erzeugender Datenträger ist und die Antenne durch den mit zumindest einen Schlitz (20) versehenen Kennzeichenkörper (11, 22, 28) gebildet ist, wobei der Datenträger elektrisch isoliert dem Schlitz (20) zugeordnet ist und im Bereich eines Endes des Schlitzes (20) und/oder der Datenträger isoliert innerhalb des Schlitzes (20) oder über dem Schlitz (20) angeordnet ist, wobei elektrisch leitende Bestandteile des Datenträgers vorzugsweise von den Begrenzungsflächen des Schlitzes (20) beabstandet sind.

11. Kennzeichen für ein Fahrzeug nach einem der vorherigen Ansprüche, **dadurch gekennzeichnet, dass** der Schlitz (20) einen Durchbruch (21) aufweist, wobei vorzugsweise der Durchbruch (21) den Schlitz (20) im Bereich seines geschlossenen Endes vergrößert und der Datenträger sich im Bereich des Durchbruchs (21) im Schlitz (20) im Kennzeichenkörper (11, 22, 28) befindet und/oder dass der Datenträger im Kennzeichenkörper (11, 22, 28) eingebettet ist, insbesondere im Schlitz (20) bzw. im Durchbruch (21) fixiert ist, vorzugsweise von mindestens einer Beschichtung auf dem Kennzeichenkörper (11, 22, 28).

12. Montagesatz bestehend aus einem Kennzeichenkörper (11, 22, 28) und einem weiteren Körper (12) zum Zusammensetzen eines Kennzeichens (10) für ein Fahrzeug nach mindestens einem der Ansprüche 1 bis 11.

13. Verfahren zur Herstellung eines Kennzeichens (10) nach einem der Ansprüche 1 bis 12 für ein Fahrzeug mit einem Kennzeichenkörper (11, 22, 28), der mindestens ein Beschriftungsfeld mit mindestens einer Beschriftung aufweist, wobei dem Kennzeichenkörper (11, 22, 28) mindestens ein berührungslos auslesbarer Transponder mit einem Datenträger und einer Antenne zur Kommunikation zugeordnet ist und wobei der Kennzeichenkörper (11, 22, 28) mit einer Schutzabdeckung abgedeckt ist, **dadurch gekennzeichnet, dass** der Kennzeichenkörper (11, 22, 28) mit einem weiteren Körper (12) als Distanzelement zwischen einer Unterseite (16) des Kennzeichenkörpers (11, 22, 28) und dem Fahrzeug zu einem festen Verbund verbunden wird, wobei nach einem Prägen des Kennzeichenkörpers (11, 22, 28) und/oder Applizieren von Folien, insbesondere einer Schutzfolie, einer Reflexfolie, einer Retroreflexfolie, einer Beschriftungsfolie, und/oder dem Applizieren des Datenträgers und der Antenne der Kennzeichenkörper (11, 22, 28) mit dem weiteren Körper (12) stoffschlüssig oder formschlüssig oder kraftschlüssig verbunden wird.

14. Verfahren zur Herstellung eines Kennzeichens (10) für ein Fahrzeug nach Anspruch 13, **dadurch gekennzeichnet, dass** zum festen Verbinden des weiteren Körpers (12) mit dem Kennzeichenkörper (11, 22, 28) auf dem weiteren Körper (12) eine doppelseitige Klebeschicht (17) aufgebracht wird, auf die der Kennzeichenkörper (11, 22, 28), vorzugsweise manuell oder maschinell, gepresst wird.

15. Verfahren zur Herstellung eines Kennzeichens (10) für ein Fahrzeug nach Anspruch 13 oder 14, **dadurch gekennzeichnet, dass** der Kennzeichenkörper (11, 22, 28) mit dem weiteren Körper (12) in einer Prägepresse verpresst wird, wobei insbesondere in den Kennzeichenkörper (11, 22, 28) und den weiteren Körper (12) eine gemeinsame Prägung, vorzugsweise Randprägung und/oder Prägung einer Numerik (13), geprägt wird.

## Claims

1. Registration plate (10) for a vehicle comprising a registration plate body (11, 22, 28) having at least one inscription field, and comprising at least one inscription assigned to the inscription field of the registration plate body (11, 22, 28), the registration plate body (11, 22, 28) being assigned at least one contactlessly readable transponder comprising a data carrier and an antenna for communication, and the registration plate body (11, 22, 28) being covered by a protective cover, the registration plate body (11, 22, 28) being fixedly connected by its underside (16) to a further body (12) and the further body (12) being designed as a spacer element between the registration plate body (11, 22, 28) and the vehicle, **characterized in that** the transponder is integrated in a tag and the tag is fixed on the registration plate body (11, 22, 28), and **in that** the tag is of self-adhesive design and is adhesively bonded onto the registration plate body (11, 22, 28) or the protective cover, the data carrier being a data carrier that generates a magnetic field, and the antenna being formed as a slot antenna (20) by the registration plate body (11, 22, 28) provided with at least one slot, the data carrier being assigned to the slot antenna (20) in an electrically insulated manner.

2. Registration plate (10) for a vehicle according to Claim 1, **characterized in that** the further body (12) partly covers the underside (16) of the registration plate body (11, 22, 28) or **in that** the further body (12) completely covers the underside (16) of the registration plate body (11, 22, 28), in particular **in that** the further body (12) and the registration plate body (11, 22, 28) are of the same size or **in that** the further body (12) is larger than the registration plate body (11, 22, 28).

3. Registration plate (10) for a vehicle according to Claim 1 or 2, **characterized in that** the registration plate body (11, 22, 28) is integrally bonded or interlockingly or force-lockingly connected, in particular adhesively bonded, press-fitted or screwed, to the further body (12) and/or **in that** the further body (12) is constructed from plastic or metal or partly from plastic and partly from metal, the further body (12) being designed to be solid, hollow or at least partly hollow or as foam and the registration plate body (11, 12, 28) being formed from metal or plastic.

4. Registration plate (10) for a vehicle according to any of the preceding claims, **characterized in that** the registration plate body (11, 22, 28) has a UHF antenna formed by a slot (29) and this UHF antenna is preferably assignable to the tag, the transponder in the tag being designed as an RFID chip that electrically couples to the UHF antenna and/or **in that** the UHF antenna shaped by a slot (29) in the registration plate body (11, 22, 28) is arranged over a cavity in the body (12) and the transponder, in particular the RFID chip, is positioned in the cavity, and is preferably secured to an inner wall of the cavity.

5. Registration plate (10) for a vehicle according to any of the preceding claims, **characterized in that** the protective cover is at least partly demetallized at least in the region of the tag and/or in the region of the slot (29) or the protective cover is designed as a prismatic film or as a PVC film or as a transparent plate, in particular composed of PMMA or PC, or as some other film.

6. Registration plate (10) for a vehicle according to any of the preceding claims, **characterized in that** the registration plate body (11, 22, 28) has a perforation (23) that is at least partly coverable by a planar, at least partly electrically conductive carrier (24), the carrier (24) having an antenna formed by at least one slot (25), and having a contactlessly readable data carrier that electrically couples to this antenna, and the further body (12) preferably being designed as a hollow body and having an opening that corresponds in terms of shape and position to the perforation (23) of the registration plate body (11, 22, 28).

7. Registration plate (10) for a vehicle according to any of the preceding claims, **characterized in that** the data carrier has an RFID chip (27) and at least one electrically conductive coil therewith via which the data carrier and/or the RFID chip (27) are/is inductively, capacitively or galvanically couplable to the antenna of the carrier (24).

8. Registration plate (10) for a vehicle according to any of the preceding claims, **characterized in that** the carrier (24) is designed as a, preferably self-adhesive, film dimensioned in such a way that it at least regionally overlaps an edge region of the perforation (23) in the registration plate body (11, 22, 28), the carrier (24), in particular the film, having at least one partly electrically conductive coating and the at least one antenna, in particular an antenna structure, being formed by this coating or by a slot in the coating.

9. Registration plate (10) for a vehicle according to any of the preceding claims, **characterized in that** the carrier (24) with the antenna (25) and the data carrier is able to be applied over the perforation (23) on the registration plate body (11, 22, 28) by way of an electrically conductive, self-adhesive, preferably double-sided self-adhesive, film, such that the carrier (24) is mechanically and electrically coupled to the registration plate body (11, 22, 28).

10. Registration plate (10) for a vehicle according to any of the preceding claims, **characterized in that** the data carrier is a data carrier that generates a magnetic field and the antenna is formed by the registration plate body (11, 22, 28) provided with at least one slot (20), the data carrier being assigned to the slot (20) in an electrically insulated manner and in the region of one end of the slot (20) and/or the data carrier being arranged in an insulated manner within the slot (20) or over the slot (20), electrically conductive constituent parts of the data carrier preferably being spaced apart from the boundary surfaces of the slot (20).

11. Registration plate (10) for a vehicle according to any of the preceding claims, **characterized in that** the slot (20) has a perforation (21), preferably the perforation (21) enlarging the slot (20) in the region of its closed end and the data carrier being situated in the registration plate body (11, 22, 28) in the region of the perforation (21) in the slot (20) and/or **in that** the data carrier is embedded in the registration plate body (11, 22, 28) in particular is fixed in the slot (20) or in the perforation (21), preferably by at least one coating on the registration plate body (11, 22, 28).

12. Assembly kit consisting of a registration plate body (11, 22, 28) and a further body (12) for assembling a registration plate (10) for a vehicle according to at least one of Claims 1 to 11.

13. Method for producing a registration plate (10) according to any of Claims 1 to 12 for a vehicle comprising a registration plate body (11, 22, 28) having at least one inscription field comprising at least one inscription, the registration plate body (11, 22, 28) being assigned at least one contactlessly readable transponder comprising a data carrier and an antenna for communication, and the registration plate body (11, 22, 28) being covered by a protective cover, **characterized in that** the registration plate body (11, 22, 28) is connected to a further body (12) as spacer element between an underside (16) of the registration plate body (11, 22, 28) and the vehicle to form a fixed composite assembly, in which case after embossing the registration plate body (11, 22, 28) and/or applying films, in particular a protective film, a reflection film, a retroreflection film, an inscription film, and/or applying the data carrier and the antenna, the registration plate body (11, 22, 28) is integrally bonded or interlockingly or force-lockingly connected to the further body (12).

14. Method for producing a registration plate (10) for a vehicle according to Claim 13, **characterized in that** for the purpose of fixedly connecting the further body (12) to the registration plate body (11, 22, 28), a double-sided adhesive layer (17) is applied on the further body (12) and the registration plate body (11, 22, 28) is pressed, preferably manually or by machine, onto said adhesive layer.

15. Method for producing a registration plate (10) for a vehicle according to Claim 13 or 14, **characterized in that** the registration plate body (11, 22, 28) is pressed together with the further body (12) in an embossing press, a joint embossing, preferably edge embossing and/or embossing of numerical information (13), being embossed in particular into the registration plate body (11, 22, 28) and the further body (12).

## Revendications

1. Plaque d'immatriculation (10) pour un véhicule, comprenant un corps de plaque d'immatriculation (11, 22, 28) qui présente au moins un champ d'inscription, et comprenant au moins une inscription qui est attribuée au champ d'inscription du corps de plaque d'immatriculation (11, 22, 28), dans laquelle au moins un transpondeur lisible sans contact, pourvu d'un support de données et d'une antenne pour la communication, est attribué au corps de plaque d'immatriculation (11, 22, 28), et dans laquelle le corps de plaque d'immatriculation (11, 22, 28) est couvert par une couverture de protection, dans laquelle le corps de plaque d'immatriculation (11, 22, 28) est par sa face inférieure (16) relié de manière solidaire à un autre corps (12), et dans laquelle le corps supplémentaire (12) est réalisé sous forme d'élément d'écartement entre le corps de plaque d'immatriculation (11, 22, 28) et le véhicule,
**caractérisée en ce que** le transpondeur est intégré dans une étiquette, et l'étiquette est fixée au corps de plaque d'immatriculation (11, 22, 28), et **en ce que** l'étiquette est réalisée de manière autocollante et est collée sur le corps de plaque d'immatriculation (11, 22, 28) ou la couverture de protection, dans laquelle le support de données est un support de données générant un champ magnétique et l'antenne est réalisée sous forme d'antenne à fentes (20) par le corps de plaque d'immatriculation (11, 22, 28) pourvu d'au moins une fente, le support de données étant attribué à l'antenne à fentes (20) de manière isolée électriquement.

2. Plaque d'immatriculation (10) pour un véhicule selon la revendication 1, **caractérisée en ce que** le corps supplémentaire (12) couvre partiellement la face inférieure (16) du corps de plaque d'immatriculation (11, 22, 28), ou **en ce que** le corps supplémentaire (12) couvre entièrement la face inférieure (16) du corps de plaque d'immatriculation (11, 22, 28), en particulier **en ce que** le corps supplémentaire (12) et le corps de plaque d'immatriculation (11, 22, 28) sont de même taille, ou **en ce que** le corps supplémentaire (12) est plus grand que le corps de plaque d'immatriculation (11, 22, 28).

3. Plaque d'immatriculation (10) pour un véhicule selon la revendication 1 ou 2, **caractérisée en ce que** le corps de plaque d'immatriculation (11, 22, 28) est relié au corps supplémentaire (12) par liaison de matière ou par complémentarité de forme ou par adhérence, en particulier collé, comprimé ou vissé, et/ou **en ce que** le corps supplémentaire (12) est composé de matière plastique ou de métal ou partiellement de matière plastique et partiellement de métal, dans laquelle le corps supplémentaire (12) est réalisé de manière pleine, creuse ou au moins partiellement creuse ou sous forme de mousse, et dans laquelle le corps de plaque d'immatriculation (11, 12, 28) est réalisé en métal ou en matière plastique.

4. Plaque d'immatriculation (10) pour un véhicule selon l'une quelconque des revendications précédentes, **caractérisée en ce que** le corps de plaque d'immatriculation (11, 22, 28) présente une antenne UHF formée par une fente (29), et ladite antenne UHF peut de préférence être attribuée à l'étiquette, dans laquelle le transpondeur est réalisé dans l'étiquette sous forme de puce RFID qui est couplée électriquement à l'antenne UHF, et/ou **en ce que** l'antenne UHF formée par une fente (29) dans le corps de plaque d'immatriculation (11, 22, 28) est disposée dans le corps (12) au-dessus d'une cavité, et le transpondeur, en particulier la puce RFID, est positionnée dans la cavité, de préférence sur une paroi intérieure de la cavité.

5. Plaque d'immatriculation (10) pour un véhicule selon l'une quelconque des revendications précédentes, **caractérisée en ce que** la couverture de protection est au moins partiellement démétallisée au moins au niveau de l'étiquette et/ou au niveau de la fente (29) ou la couverture de protection est réalisée sous la forme d'un film prismatique ou d'un film PVC ou d'une plaque transparente, en particulier en PMMA ou PC, ou d'un autre film.

6. Plaque d'immatriculation (10) pour un véhicule selon l'une quelconque des revendications précédentes, **caractérisée en ce que** le corps de plaque d'immatriculation (11, 22, 28) présente un perçage (23) qui peut être couvert au moins partiellement par un support plan (24) au moins partiellement électriquement conducteur, dans laquelle le support (24) présente une antenne formée par au moins une fente (25) et un support de données lisible sans contact, couplé électriquement à ladite antenne, et dans laquelle le corps supplémentaire (12) est réalisé de préférence sous la forme d'un corps creux et présente une ouverture qui correspond en forme et en position au perçage (23) du corps de plaque d'immatriculation (11, 22, 28) .

7. Plaque d'immatriculation (10) pour un véhicule selon l'une quelconque des revendications précédentes, **caractérisée en ce que** le support de données présente une puce RFID (27) et au moins une bobine électriquement conductrice avec celle-ci par laquelle le support de données et/ou la puce RFID (27) peuvent être couplés à l'antenne du support (24) de manière inductive, capacitive ou galvanique.

8. Plaque d'immatriculation (10) pour un véhicule selon l'une quelconque des revendications précédentes, **caractérisée en ce que** le support (24) est réalisé sous la forme d'un film, de préférence autocollant, qui est dimensionné de telle sorte qu'il chevauche au moins par endroits une zone marginale du perçage (23) dans le corps de plaque d'immatriculation (11, 22, 28), dans laquelle le support (24), en particulier le film, présente au moins un revêtement au moins partiellement électriquement conducteur, et ledit revêtement ou une fente dans le revêtement constitue ladite au moins une antenne, en particulier une structure d'antenne.

9. Plaque d'immatriculation (10) pour un véhicule selon l'une quelconque des revendications précédentes, **caractérisée en ce que** le support (24) pourvu de l'antenne (25) et du support de données peut être appliqué au-dessus du perçage (23) sur le corps de plaque d'immatriculation (11, 22, 28) par un film autocollant, de préférence autocollant double face, et électriquement conducteur de sorte que le support (24) est couplé mécaniquement et électriquement au corps de plaque d'immatriculation (11, 22, 28).

10. Plaque d'immatriculation (10) pour un véhicule selon l'une quelconque des revendications précédentes, **caractérisée en ce que** le support de données est un support de données générant un champ magnétique, et l'antenne est formée par le corps de plaque d'immatriculation (11, 22, 28) pourvu d'au moins une fente (20), dans laquelle le support de données est attribué à la fente (20) de manière isolée électriquement, et est disposé au niveau d'une extrémité de la fente (20) et/ou du support de données de manière isolée à l'intérieur de la fente (20) ou au-dessus de la fente (20), dans laquelle des composants électriquement conducteurs du support de données sont de préférence espacés des surfaces de délimitation de la fente (20).

11. Plaque d'immatriculation pour un véhicule selon l'une quelconque des revendications précédentes, **caractérisée en ce que** la fente (20) présente un perçage (21), dans laquelle de préférence le perçage (21) agrandit la fente (20) au niveau de son extrémité fermée et le support de données se trouve au niveau du perçage (21) dans la fente (20) dans le corps de plaque d'immatriculation (11, 22, 28), et/ou **en ce que** le support de données est incorporé dans le corps de plaque d'immatriculation (11, 22, 28), en particulier dans la fente (20) ou fixé dans le perçage (21), de préférence d'au moins un revêtement sur le corps de plaque d'immatriculation (11, 22, 28).

12. Kit de montage composé d'un corps de plaque d'immatriculation (11, 22, 28) et d'un corps supplémentaire (12) pour assembler une plaque d'immatriculation (10) pour un véhicule selon au moins l'une des revendications 1 à 11.

13. Procédé permettant de fabriquer une plaque d'immatriculation (10) selon l'une quelconque des revendications 1 à 12 pour un véhicule, pourvue d'un corps de plaque d'immatriculation (11, 22, 28) qui présente au moins un champ d'inscription avec au moins une inscription, dans lequel au moins un transpondeur lisible sans contact, pourvu d'un support de données et d'une antenne pour la communication, est attribué au corps de plaque d'immatriculation (11, 22, 28), et dans lequel le corps de plaque d'immatriculation (11, 22, 28) est couvert par une couverture de protection,
**caractérisé en ce que** le corps de plaque d'immatriculation (11, 22, 28) est relié avec un corps supplémentaire (12) en tant qu'élément d'écartement entre une face inférieure (16) du corps de plaque d'immatriculation (11, 22, 28) et le véhicule en un ensemble solidaire, dans lequel après un estampage du corps de plaque d'immatriculation (11, 22, 28) et/ou une application de films, en particulier d'un film de protection, d'un film réfléchissant ou d'un film rétroréfléchissant, d'un film d'inscription et/ou l'application du support de données et de l'antenne, le corps de plaque d'immatriculation (11, 22, 28) est relié au corps supplémentaire (12) par liaison de matière ou par complémentarité de forme ou par adhérence.

14. Procédé permettant de fabriquer une plaque d'immatriculation (10) pour un véhicule selon la revendication 13, **caractérisé en ce que** pour la liaison solidaire du corps supplémentaire (12) au corps de plaque d'immatriculation (11, 22, 28), une couche adhésive double face (17) est appliquée sur le corps supplémentaire (12) sur laquelle le corps de plaque d'immatriculation (11, 22, 28) est comprimé, de préférence manuellement ou mécaniquement.

15. Procédé permettant de fabriquer une plaque d'immatriculation (10) pour un véhicule selon la revendication 13 ou 14, **caractérisé en ce que** le corps de plaque d'immatriculation (11, 22, 28) est comprimé avec le corps supplémentaire (12) dans une presse à estamper, dans lequel en particulier un estampage commun, de préférence un estampage d'une bordure et/ou un estampage d'un ensemble numérique (13), est réalisé dans le corps de plaque d'immatriculation (11, 22, 28) et le corps supplémentaire (12).
